# EUROPEAN PATENT SPECIFICATION

(11) **EP 3 744 444 B1**
(45) Date of publication and mention of the grant of the patent: **31.08.2022**
(21) Application number: 19212166.3
(22) Date of filing: 28.11.2019
(51) Int. Cl.: B33Y 40/20, B29C 64/35, B22F 10/68, B33Y 30/00, B29C 64/25, B22F 10/28

(54) **TREATMENT AND DE-POWDERING PROCESSES AND SYSTEMS FOR ADDITIVELY FORMED COMPONENTS**
BEHANDLUNGS- UND PULVERENTFERNUNGSVERFAHREN UND -SYSTEME FÜR GENERATIV GEFORMTE KOMPONENTEN
PROCÉDÉS ET SYSTÈMES DE TRAITEMENT ET ÉLIMINATION DE POUDRE POUR COMPOSANTS FORMÉE PAR FABRICATION ADDITIVE

(30) Priority: 31.05.2019 US 201916428177
(43) Date of publication of application: 02.12.2020
(73) Proprietor: Hamilton Sundstrand Corporation, Charlotte, NC 28217-4578 (US)
(72) Inventor: MORGANSON, David W., Marlborough, CT Connecticut 06447 (US); GUSTAFSON, Brendan T., Vernon, CT Connecticut 06066 (US); PURDY, Jason, Simsbury, CT Connecticut 06070 (US)
(74) Representative: Dehns

(56) References cited:
- WO-A1-2019/224556
- DE-U1-202016 003 042
- US-A1- 2018 215 097
- US-A1- 2018 297 284

## Description

### BACKGROUND

The subject matter disclosed herein generally relates to additive manufacturing processes for components and, more particularly, to powder removal from components after formation.

One method of additive manufacturing is Powder Bed Fusion ("PBF"). Powder bed fusion methods use either a laser or electron beam to melt and fuse material powder together. Electron beam melting (EBM) methods require a vacuum but can be used with metals and alloys in the creation of functional parts. The PBF processes typically involve the spreading of a powder material over previous layers. There are different mechanisms to enable this, including a roller or a blade. A hopper or a reservoir is arranged to supply fresh material to the process. Direct metal laser sintering (DMLS) processes sinter the powder, layer by layer. Such processes will fuse powder material together.

After the additive manufacturing process, excess powder may remain in or on the part (e.g., within internal cavities and/or formed on exteriors surfaces). The excess manufacturing material and power may not be melted during the manufacturing process, or may be partially melted and attached to a surface, and must be removed. It may be difficult and/or inefficient to remove this excess manufacturing material, such as requiring additional steps and/or hardware to perform the removal process. For example, there are some forms of powder removal that require the use of ultrasonic energy within a liquid bath. The selection of liquids is quite limited due to the risk of exposure to the operator, effect on equipment air filtration system, and effectiveness of the liquids while being used in an oxygenated environment. In addition, it may be undesirable to allow the liquid to dry on the part due to potential for surface corrosion (such as in the case of allowing detergent or water to dry on an aluminum part). Liquids for wet processing may include detergents, solvents, oils, water, liquid nitrogen, and liquid carbon dioxide, for example.

Another form of powder removal is a dry method which may employ a hammering effect, pneumatic vibration, or ultrasonic energy in a dry environment. Dry processing typically employs the use of a processing operation (e.g., vibration of a component) in an atmospheric or inert gas environment. However, the dry process is typically only useful for bulk powder removal, and powder trapped within internal passages may not be fully removed by such process.

US 2018/0297284 A1 discloses a de-powdering system using both dry and wet methods.

### BRIEF DESCRIPTION

According to the invention, a method for powder removal according to claim 1 is provided. The method includes placing the additively manufactured component into a treatment chamber within a treatment vessel, performing a first treatment operation on the additively manufactured component within the treatment vessel, using a first treatment material, and performing a second treatment operation on the additively manufactured component within the treatment vessel, using a second treatment material, wherein the first treatment material is a gaseous treatment material and the second treatment material is a liquid treatment material.

In addition to one or more of the features described above, or as an alternative, further embodiments of the methods may include that the second treatment material is at least one of a detergent, oil, acid, base, solvent, deionzed water, and alcohol.

In addition to one or more of the features described above, or as an alternative, further embodiments of the methods may include that the treatment chamber comprises a first treatment subchamber and a second treatment subchamber, wherein the first treatment operation is performed in the first treatment subchamber and the second treatment operation is performed in the second treatment subchamber.

In addition to one or more of the features described above, or as an alternative, further embodiments of the methods may include conveying the additively manufactured component on a conveyor through each of the first treatment subchamber and the second treatment subchamber.

According to the invention, the method includes performing a drying operation within the treatment vessel, the drying operation performed after the second treatment operation.

The drying operation comprises operation of a cryogenic moisture trap.

In addition to one or more of the features described above, or as an alternative, further embodiments of the methods may include, prior to the second treatment operation, submerging the additively manufactured component in the second treatment material.

In addition to one or more of the features described above, or as an alternative, further embodiments of the methods may include that during at least one of the first treatment operation and the second treatment operation, at least one of ultrasonic energy and pneumatic vibrations are applied to the additively manufactured component.

In addition to one or more of the features described above, or as an alternative, further embodiments of the methods may include that the second treatment operation comprises submerging the additively manufactured component in the second treatment material, applying ultrasonic energy to the additively manufactured component in the second treatment material, actively reorienting the additively manufactured component in the second treatment material within the second treatment material, and removing the additively manufactured component from the second treatment material.

According to the invention, the method includes, after removing the additively manufactured component from the second treatment material, operating a cryogenic moisture trap within the treatment vessel.

In addition to one or more of the features described above, or as an alternative, further embodiments of the methods may include that the additively manufactured component is lowered into the second treatment material to submerge the additively manufactured component.

In addition to one or more of the features described above, or as an alternative, further embodiments of the methods may include that a level of the second treatment material is raised to submerge the additively manufactured component.

According to the invention, a system for removing powder according to claim 9 is The system includes a treatment vessel defining a treatment chamber therein, a first treatment material source configured to supply a first treatment material into the treatment chamber for performing a first treatment operation on the additively manufactured component located within the treatment vessel, a second treatment material source configured to supply a second treatment material into the treatment chamber for performing a second treatment operation on an additively manufactured component located within the treatment vessel, and a cryogenic moisture trap configured within the treatment vessel, the cryogenic moisture trap configured to perform a drying operation on the additively manufactured component.

In addition to one or more of the features described above, or as an alternative, further embodiments of the component treatment systems may include that the second treatment material is at least one of detergent, oil, acid, base, solvent, deionzed water, and alcohol.

In addition to one or more of the features described above, or as an alternative, further embodiments of the component treatment systems may include that the treatment chamber comprises a first treatment subchamber and a second treatment subchamber, wherein the first treatment operation is performed in the first treatment subchamber and the second treatment operation is performed in the second treatment subchamber.

In addition to one or more of the features described above, or as an alternative, further embodiments of the component treatment systems may include that the cryogenic moisture trap is located in a third treatment subchamber located adjacent the second treatment subchamber.

In addition to one or more of the features described above, or as an alternative, further embodiments of the component treatment systems may include a conveyor arranged to move the additively manufactured component through the first treatment subchamber and the second treatment subchamber.

In addition to one or more of the features described above, or as an alternative, further embodiments of the component treatment systems may include a control arm configured to engage with and releasably retain, support, and hold the additively manufactured component within the treatment chamber.

In addition to one or more of the features described above, or as an alternative, further embodiments of the component treatment systems may include that the control arm is configured to orient and reorient the additively manufactured component within the treatment chamber.

In addition to one or more of the features described above, or as an alternative, further embodiments of the component treatment systems may include that the control arm is configured to apply vibration to the additively manufactured component when the additively manufactured component is engaged by the control arm.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a schematic illustration of a component treatment system in accordance with an embodiment of the present disclosure;
FIG. 2 is a flow process 200 post-manufacturing treatment of an additively manufactured component in accordance with an embodiment of the present disclosure;
FIG. 3 is a flow process post-manufacturing treatment of an additively manufactured component in accordance with an embodiment of the present disclosure; and
FIG. 4 is a schematic illustration of a component treatment system in accordance with an embodiment of the present disclosure.

### DETAILED DESCRIPTION

As discussed above, after an additive manufacturing process, excess manufacturing material may remain in or on a formed part or component. The excess manufacturing material on surfaces of the component may be burrs or similar partially sintered structures. If a specific finish is required, such excess manufacturing materials much be removed. The excess manufacturing material within internal cavities may be powder that was not sintered during the manufacturing process, and may be trapped within internal passages of the component (i.e., the powder may be intentionally left as powder during the manufacturing process). The excess manufacturing material and power may not be melted during the manufacturing process, or may be partially melted and attached to a surface, and must be removed. It may be difficult and/or inefficient to remove this excess manufacturing material, such as requiring additional steps and/or hardware to perform the removal process.

For example, as noted above, a liquid bath may be employed with ultrasonic energy employed to urge the power out of internal passages and to be removed from surfaces of the component (e.g., through the act of cavitation). However, these liquid baths may require unique and special fluids to be used for treatment of the components. The selection of liquids is quite limited due to the risk of exposure to the operator, effect on equipment air filtration system, and effectiveness of the liquids while being used in an oxygenated environment. Such liquids may include, for example and without limitation, detergents, deionzed water, solvents, oils, and/or alcohol. The selection of materials will be guided by their interaction with the part material (for instance, a caustic or acidic material may or may not be suitable for a reactive part depending on the desired outcome). Surface tension, wettability, cavitation energy potential and interaction, and disposal after use are all considerations when down-selecting a liquid for powder removal. After treatment of a component in a wet process, the component may need to be rinsed, and must be dried to avoid issues associated with the liquids selected for the treatment processes.

Another form of powder removal is a dry method which may employ hammering, pneumatic vibration, and/or ultrasonic energy applied to the component in a dry environment. However, the dry process is typically only useful for bulk powder removal, and powder trapped within internal passages may not be removed by such process.

A combination of the two processes may be employed, where a dry process is used to remove bulk powder from the component. Subsequently, the component may be moved into a wet process system, such as a liquid bath. Alternatively, the reverse may be true, where a wet process is performed first. In either case, and in line with typical processes, the component may be moved around from one station to another to perform the different treatment processes to remove excess manufacturing material/powder from external surfaces and/or internal passages or cavities.

In view of the above, embodiments of the present disclosure are directed to improved post-manufacturing treatments and processes for additively manufactured components and parts. Embodiments described herein may be employed for any industry that may employ additive manufacturing for forming and creating parts and components. One such application may be aerospace applications. Various components of aircraft may be manufactured using additive processes, such as Powder Bed Fusion (and particularly Laser Powder Bed Fusion using metal powders). Components and parts that may be formed and treated with embodiments of the present disclosure include, without limitation, brackets, heat exchangers, combustor panels, components of internal combustion engines, airframe parts, aircraft interior components, etc.

Embodiments described herein incorporate both wet and dry processes for treatment of components and for powder removal. Additionally, embodiments described herein employ a cryogenic moisture trap to address the concerns raised with using a wet method (e.g., exposure to liquids used for treatment). Embodiments described herein are directed to systems and processes for performing dry treatment, wet treatment, and drying all within a single system. As such, embodiments described here can eliminate the removal and movement or transfer of treated components between different stations for treatment.

For example, in accordance with embodiments of the present disclosure, an additively manufactured component may be loaded into a treatment chamber for the component to be cleaned of powder. Once the part is loaded a dry treatment process or a wet treatment process may be performed. The dry treatment process may include vibration or acoustic energy directed to the component. Such dry treatment may remove excess manufacturing material from the external surfaces of the component and/or some bulk material from internal cavities. A wet treatment process may include submerging the component within a fluid, and ultrasonic energy may be applied to the component to cavitate the fluid and urge material from internal passages to be removed therefrom. The submerging of the component may be a movement of the component such as lowering the component into a fluid or may involve raising a fluid level within the treatment chamber such that the fluid encompasses the component. Ultrasonic energy may then be introduced to the component while the orientation of the component is constantly varied.

Once the wet process cycle is completed, the component is removed from the fluid (e.g., the fluid level is dropped or the part is removed from the liquid), and the component will be coated, at least partially, by the fluid used for the wet treatment process. Rinsing and drying the part to prevent water spots or undue contamination is enabled through embodiments of the present disclosure. To dry the component, and thus eliminate the potential for an operator to be exposed to the liquid material, a cryogenic moisture trap is moved into place within the treatment chamber. Once in place, the cryogenic moisture trap is brought to capture temperature and the part is then blown dry using an inert gas. During this process, most liquids are trapped due to a change to a solid phase, or a change in viscosity reducing aerosolizing traits. That is, the liquid on the component may be vaporized, and due to the blow dry operation, the vaporized treatment fluid may be drawn to the cryogenic moisture trap. The vapor may then condense and/or solidify on the cryogenic moisture trap. As such, any remaining fluid (in liquid form) may be removed from the component. It is also possible to rinse the component, then use blowers to dry the component. The part is removed from the treatment area while the undesirable substances are entrapped by the cryogenic trap. Subsequently, the temperature of the cryogenic moisture trap may be increased to cause the trapped treatment fluid to revert to liquid or vapor phase and allow for extraction of treatment fluid, and enable the cryogenic moisture trap to be cleaned and prepared for another treatment cycle. Depending on the configuration of the treatment chamber and the nature of the different cycles or phases, the cryogenic moisture trap may be moveable or fixed in place relative to the chamber. Accordingly, the cryogenic moisture trap may be moved out of the way during a wet treatment operation or may be submerged as the liquid level rises to encapsulate the component, then exposed when the liquid level is lowered. In this instance, the cryogenic trap may be activated after the cryogenic trap is exposed above the liquid level.

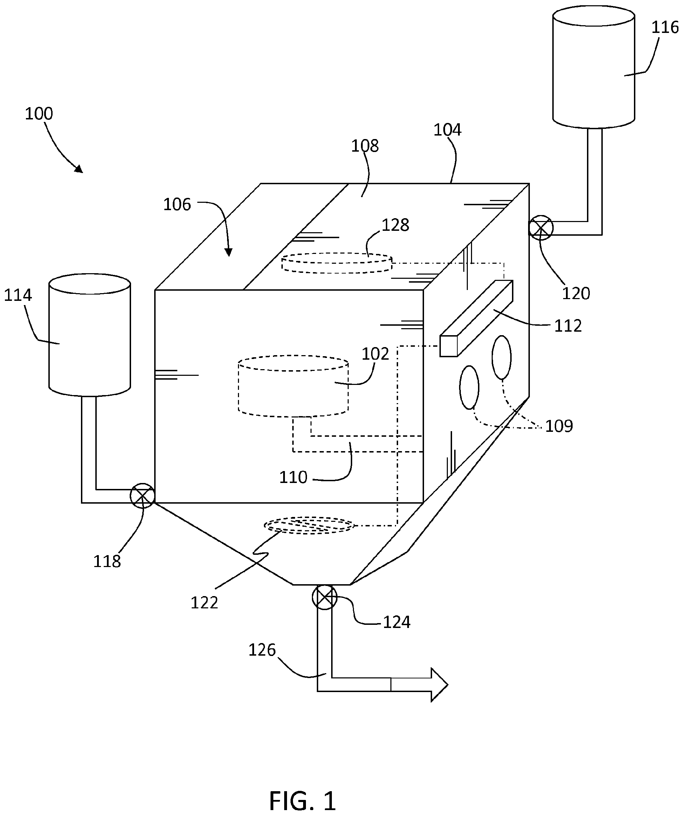

Turning now to FIG. 1, a schematic illustration of a component treatment system 100 in accordance with an embodiment of the present disclosure is shown. The component treatment system 100 is configured to treat a component 102 after manufacturing of the component 102. The component 102 is an additively manufactured component or part. In some embodiments, the component 102 is formed through a Laser Powder Bed Fusion manufacturing process. The component 102 is positioned within a treatment vessel 104 that defines a treatment chamber 106 therein. The component 102, as an additively manufactured component, may include excess manufacturing material (e.g., within internal passages/cavities or partially sintered elements on surfaces of the component). The component treatment system 100 is configured to enable both dry and wet post-manufacturing treatment processes on the component 102.

The component treatment system 100 includes the treatment vessel 104 defining the treatment chamber 106. The component 102 is placed within the treatment vessel 104. In this illustrative embodiment, the treatment vessel 104 includes an access panel 108 that allows for placing the component 102 within the treatment chamber 106 and removal of the component 102 therefrom. The access panel 108 is illustratively shown on the top of the treatment vessel 104. In other embodiments, the access panel 108 may be located on a side of treatment vessel 104, or otherwise located, depending on the geometry and arrangement of the treatment vessel 104. The access panel 108 may be a door or other openable part of the treatment vessel 104 and may be slidable, hinged, removable, etc.

The component 102 may be supported within the treatment vessel 104 on a control arm 110. The control arm 110 is arranged to engage with and releasably retain, support, and hold the component 102 within the treatment chamber 106. The control arm 110 may be a movable or actuatable to control a position and/or orientation of the component 102 within the treatment chamber 106. In some embodiments, the control arm 110 may further be configured to apply vibration to the component 102 during a treatment process. The control arm 110 may also be movable or extendable into and out of the treatment vessel 104 to allow for easy access for placing the component 102 into or taking the component 102 out of the treatment chamber 106. The control arm 110, and the rest of the component treatment system 100, may be controlled by a controller 112. In this embodiment, the controller 112 is illustrated as part of or attached to the treatment vessel 104. However, in other embodiments, the controller may be a separate control element, such as a general purpose or dedicated computer that is operably connected to the component treatment system 100. In accordance with some embodiments, optional gloved access ports 109 may be provided to permit manual manipulation and/or orientation of the component by an operator.

Further, in some embodiments, a blower, blow gun, hammer, brushes, or other powder removal tools may be accessible within the chamber for manual cleaning and powder removal.

As noted, the component treatment system 100 is configured for both wet and dry treatment processes. In this embodiment, the component treatment system 100 includes a first treatment material source 114 and a second treatment material source 116. The first treatment material source 114 contains may a liquid treatment material and the second treatment material source 116 contains a gaseous treatment material. The first treatment material source 114 is operably connected to the treatment chamber 106 by a first control actuator 118 and the second treatment material source 116 is operably connected to the treatment chamber 106 by a second control actuator 120. The first and second control actuators 118, 120 can include, for example, valves, pumps, metering elements, sensors, etc. to enable control of a flow of fluid from the respective first and second treatment material sources 114, 116. In some embodiments, the controller 112 may be operably connected to and/or in communication with the first and second control actuators 118, 120 to control operation thereof. In other embodiments, or in combination therewith, the first and second control actuators 118, 120 may be manually operated. In addition, provision may be made to permit the flow of liquid through and around features of the component and/or direct ultrasonic energy.

The first treatment material source 114 can be controlled, through operation of the first control actuator 118, to supply the liquid treatment material into the treatment chamber 106. Similarly, second treatment material source 116 can be controlled, through operation of the second control actuator 120, to supply the gaseous treatment material into the treatment chamber 106. The liquid treatment material may be used for a wet treatment process and the gaseous treatment material may be used for a dry treatment process and/or for performing a drying operation after a wet treatment process. A third control actuator may be provided to enable a rinse fluid (typically a liquid) to be directed to an remove and/or neutralize liquid treatment material prior to a drying operation.

The component treatment system 100 also includes a cryogenic moisture trap 122 located within the treatment vessel 104. The cryogenic moisture trap 122 may be operably connected to and/or controlled by the controller 112. The cryogenic moisture trap 122 is arranged at a position below the component 102, when the component 102 is placed within the treatment vessel 104. The cryogenic moisture trap 122 may be a coil or other structure, such as a wire mesh, a metal rod, or have other structure. The cryogenic moisture trap 122 is positioned such that during a drying operation, moisture (e.g., excess liquid treatment material) that is on and/or trapped within the component 102 can be extracted and removed from the component 102. Depending on the materials employed and the arrangement of the components, in some embodiments, the cryogenic moisture trap may be arranged next to or above the component (if above, the cryogenic moisture trap or component may be moved during a trap cleaning process). In this embodiment, the cryogenic moisture trap 122 is arranged and positioned relative to an outlet 124 that may include a valve or other actuator that is operable to allow for the removal of excess liquid treatment fluid after a wet treatment process and/or of material collected and trapped by the cryogenic moisture trap 122. As such, the outlet 124 may be connected to a drain 126 for removal of material from the treatment chamber 106.

In some embodiments, the first treatment material source 114 can be controlled, through operation of the first control actuator 118, to supply the liquid treatment material into the treatment chamber 106. During this process, the treatment chamber 106 may be filled to a specific, predetermined level. In this configuration, the cryogenic moisture trap 122 may act as a barrier to liquid, aerosolized droplets, and vapors, but allows for powder to fall into the liquid. Such a configuration may reduce hazard and cycle times by preventing swirling of powder (the powder becomes trapped in the liquid). Moreover, dry powder is a higher risk for handling as a waste, and the resultant wet sludge of this mode is safer and potentially easier to handle. Furthermore, dry powder is classified as a higher transport risk and disposal category (e.g., potentially a hazardous material). By converting the removed powder to an industrial sludge in-process, the classification can be changed to a safer and more economically favorable one at a lower "hazardous" threshold (e.g., the wet classification may be "non-hazardous"). In some embodiments, the liquid treatment material may be deionized water or silicone oil. In the event of a spill, an operator may find it easier to clean up a wet vs a dry spill. For example, wet sludge does not contaminate as large of an area, and the risk of exposure and/or ignition (e.g., some powders burn) may be lower than a dry powder spill from a machine.

Additionally, air filters last longer in a machine with a wet trap (e.g., cryogenic moisture trap) because the wet trap does much of the work that may be handled by a filter in dry-only systems. In accordance with some embodiments, an air jet and filtered air exhaust are arranged above the liquid upper fill line at all times. In other embodiments, separately or in combination, a gas exhaust may be snorkeled below the liquid level. In such embodiments, a gas may be provided to bubble through the liquid and remove much of the particulate before the particulate reaches a dry filter. In a wet bubbler approach, cryogenic moisture trap can ensure that the liquid remains apart and away from the component.

The treatment vessel 104 may be configured with fans, blowers, vibration generation elements, etc. as will be appreciated by those of skill in the art. For example, as noted above, to perform a dry treatment operation, the treatment chamber 106 may be filled with the gaseous treatment material from the second treatment material source 116, such as an inert gas, and the control arm 110 may be vibrated and rotated to orient the component 102 at different orientations within the treatment chamber 106 to allow for excess manufacturing material to be removed from the surface and/or interior passages of the component 102. A fan or blower 128 may be arranged within the treatment chamber 106, and may be affixed to and/or part of the treatment vessel 104. The blower 128 may be controlled by the controller 112 to cause an airflow within the treatment chamber 106, and may aid in the removable of excess manufacturing material on or in the component 102. Access ports (e.g., gloved ports) may be provided to permit an operator to conduct manual powder removal using tools familiar to those of skill in the art and/or to enable manipulation and/or manual orientation of the component 102.

The blower 128 may also be employed during a drying operation performed after a wet treatment process. For example, in a wet treatment process, the treatment chamber 106 may be filled with liquid treatment material from the first treatment material source 114. The liquid treatment material may be supplied with sufficient quantity/volume to submerge the component 102 within liquid treatment material. The component 102 may then be moved, rotated, oriented, and/or vibrated to cause the liquid treatment material to coat and enter internal structures of the component 102. Ultrasonic energy may be applied to the component such that a cavitation process occurs within the liquid treatment material which can dislodge and remove any remaining excess manufacturing material on or in the component 102 (e.g., excess powder material from an additive manufacturing process). After the wet treatment process, the liquid treatment material may be evacuated, drained, or otherwise removed from the treatment chamber. At such time, the component 102 will be wet or have some amount of the liquid treatment material retained to the surfaces and/or internal structures/passages of the component 102. At this stage, optionally, a rinsing fluid (e.g., typically a liquid) may be employed to rinse away and/or neutralize the liquid treatment material. The rising operation may be performed through misting application, flow application, and/or submerging the component 102 into the rising fluid. To remove this excess liquid/moisture, a drying process may be performed. The drying process may involve injection of an inert gas into the treatment chamber, activation of the cryogenic moisture trap 122 (e.g., reduced in temperature), and operation of the blower 128. The cryogenic moisture trap 122 will collect the excess moisture which may evaporate from the surfaces or internal structures of the component 102 and be attracted to the cooled cryogenic moisture trap 122. The cryogenic moisture trap 122 may subsequently be warmed to release any trapped treatment material which may have condensed or solidified on the cryogenic moisture trap 122.

The treatment vessel 104 is a container or other structure that is sealable for performing various operations or procedures within the treatment chamber 106. When sealed, the treatment vessel 104 can contain gaseous and/or liquid treatment materials. The gaseous treatment materials, which may be supplied form the second treatment material source 116, may be an inert gas or other gas to enable dry processing for excess manufacturing material (e.g., powder) removal from the component 102. The liquid treatment materials, which may be supplied form the first treatment material source 114, may be detergents, deionzed water, and/or alcohol to enable wet processing for excess manufacturing material (e.g., powder) removal from the component 102.

Further, because the treatment vessel 104 is sealed, it is possible to perform multiple different types of processing within the single treatment vessel 104, without removing the component 102 from the treatment vessel 104. For example, a dry processing operation may be performed within the treatment vessel 104 to remove bulk excess powder. After the dry processing, the gas used for the dry processing may be evacuated from the treatment chamber 106 (or a portion of the gas may be evacuated) and a liquid treatment material may be supplied into the treatment chamber 106. When the component 102 is submerged within the liquid treatment material, a wet processing operation may be performed within the treatment vessel 104. Subsequently, the liquid treatment material may be evacuated from the treatment chamber 106. After the liquid treatment material is removed, the component 102 may be wet with residual moisture of the liquid treatment material on surfaces of the component 102 or trapped within internal passages or structures of the component 102. Additional, optional, liquid treatment cycles (e.g., secondary, tertiary, etc.) may be performed. As such, a drying operation may be performed within the treatment vessel 104, employing operation of the cryogenic moisture trap 122. The drying operation may include supplying additional inert gas from the second treatment material source into the treatment chamber to enable drying under inert conditions. After drying, the component 102 may be removed from the treatment vessel 104.

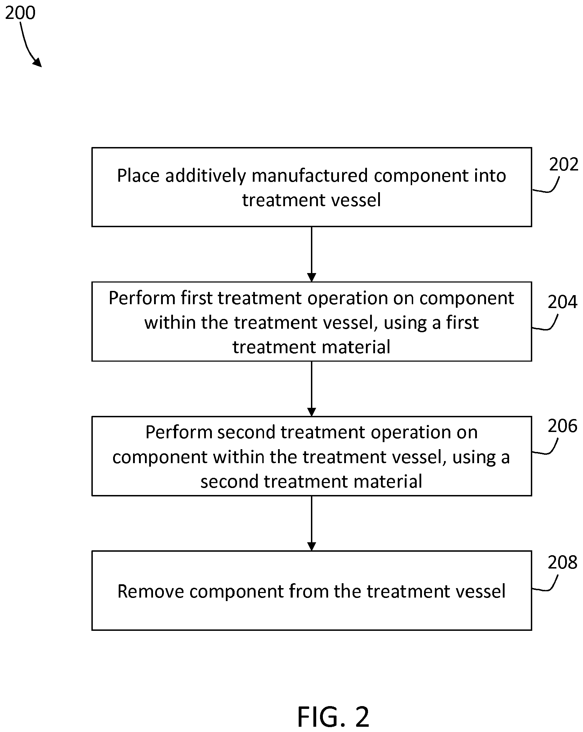

Turning now to FIG. 2, a flow process 200 for post-manufacturing treatment of a component, in accordance with an embodiment of the present disclosure, is shown. The flow process 200 may be performed using a component treatment system as shown and described herein. The component to be treated in the flow process 200 is an additively manufactured component, for example from a Powder Bed Fusion additive manufacturing process. The component treatment system used for the flow process 200 may be configured for both wet and dry post-manufacturing treatment of components.

A block 202, the additively manufactured component is placed within a treatment chamber of a treatment vessel. The component may have excess manufacturing material located on and/or within the component that is left over from the additive manufacturing process. For example, some excess manufacturing material structures may be formed on surfaces of the component, such as burrs of partially melted or partially sintered powder material. Further, for example, excess manufacturing material powder may be trapped within internal structures (e.g., passages, cavities, voids, etc.). The component may be placed on or attached to a control arm within the treatment vessel. As part of this step, the component may be sealed within the treatment vessel.

At block 204, a first treatment operation is performed on the component, using a first treatment material. The first treatment operation is a dry treatment process with the first treatment material being a gas (e.g., an inert gas). To perform the dry treatment process, an inert gas may be supplied into the treatment chamber. In the inert environment within the treatment vessel, the component may be dry treated by applying vibration and changing the orientation of the component within the treatment chamber. The dry process may be used to remove bulk powder that is on the exterior surfaces of the component and/or some of the interior surfaces/structures of the component. At the conclusion of the first treatment operation, a treatment material (e.g., the inert gas) may be removed from the treatment chamber (wholly or partially).

At block 206, a second treatment operation is performed on the component, using a second treatment material. The second treatment operation of this embodiment is a wet treatment process, with the second treatment material being a liquid (e.g., detergents, deionzed water, and/or alcohol). The liquid treatment material is supplied into the treatment chamber from a respective treatment material source. The liquid may be supplied to raise a liquid level within the treatment vessel such that the liquid level will encompass the component (i.e., the component is submerged within the liquid). Once submerged, ultrasonic energy may be applied to the component within the liquid to aid in dislodging or removing remaining excess manufacturing material that is retained within or on the component. A flow may be induced in the liquid to aid evacuation of the powder. Advantageously, the liquid may enter internal structures of the component, and the application of ultrasonic energy may cause a cavitation effect to be generated, thereby removing the excess manufacturing materials. During this operation, the component may be reoriented within the treatment chamber to enable, for example, loosened material to exit the component.

During the second treatment operation, after the ultrasonic application and process is complete, the liquid may be drained from the treatment vessel or the component may be lifted or raised out of the liquid, such that the component may be exposed to a gas environment within the treatment chamber (rather than a liquid environment). The liquid may be exchanged for a secondary or tertiary, etc., material (i.e., a different liquid), or the same material may be used in multiple cycles before the drying phase. In the gas environment, such as an inert gas environment, the gas may be supplied from the same source that is used in block 202 described above. Because, some liquid treatment material will remain on or in the component, such liquid much be removed before handling of the component. To remove the liquid, a cryogenic moisture trap is operated (e.g., reduce in temperature) within the treatment chamber to cause the remaining liquid to evaporate from the component (e.g., transition from liquid to gas state) and then condense or solidify on the cryogenic moisture trap. A blower may be operated to cause an airflow (flow of the inert gas) within the treatment chamber, thus aiding in collection of the moisture at the cryogenic moisture trap. The cryogenic moisture trap may then be operated to release any trapped moisture (e.g., increase in temperature).

At block 208, the component, having been treated by at least two separate treatment operations, may be removed from the treatment vessel.

It will be appreciated that although the above described process starts with a dry process first followed by a wet process, the opposite may also be true and performed within the single treatment vessel. Furthermore, additional processing steps may be performed. For example, a third treatment operation may be performed using a different liquid than that used in the second treatment operation. Or the same liquid may be used multiple times, for repeated liquid processing.

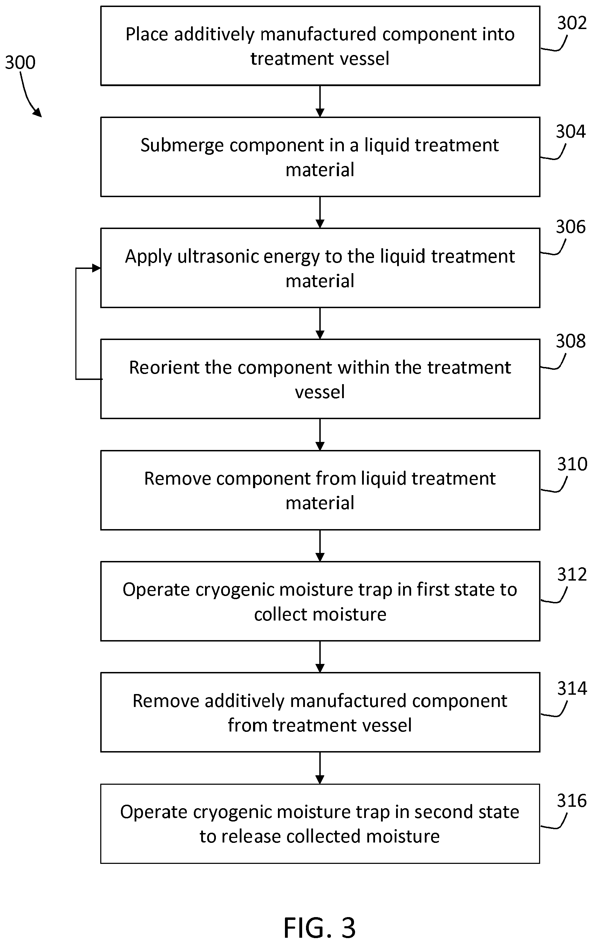

Turning now to FIG. 3, a flow process 300 in accordance with an embodiment of the present disclosure is shown. The flow process 300 is a process for a liquid treatment of an additively manufactured component, and is performed using a treatment vessel as shown and described herein - i.e., capable of multiple different treatment processes. The flow process 300 may be representative of a process performed block 204 or 206 of flow process 200 shown in FIG. 2.

A block 302, the additively manufactured component is placed within a treatment chamber of a treatment vessel. The component may have excess manufacturing material located on and/or within the component that is left over from the additive manufacturing process. For example, some excess manufacturing material structures may be formed on surfaces of the component, such as burrs of partially melted or partially sintered powder material. Further, for example, excess manufacturing material powder may be trapped within internal structures (e.g., passages, cavities, voids, etc.). The component may be placed on or attached to a control arm within the treatment vessel. As part of this step, the component may be sealed within the treatment vessel.

At block 304, the component is submerged in a liquid treatment material. The submerging may be achieved by supplying a liquid treatment material from a liquid treatment material source into the treatment chamber. The supply of the liquid treatment material may raise a liquid level such that it encompasses the component within the treatment chamber. In an alternative configuration, the component may be lowered into a reservoir or bath of the liquid treatment material that is housed within the treatment vessel. The liquid treatment material may be a detergent, oil, solvent, acid, base, deionzed water, and/or alcohol. The selection of the liquid treatment material may be made based, in part, upon characteristics of the component and/or the excess manufacturing material to be removed from the component. It is noted that a dry treatment process may be performed on the component prior to this step.

At block 306, ultrasonic energy is applied to the component submerged in the liquid treatment material. The application of ultrasonic energy may cause a cavitation effect to be generated to dislodge excess manufacturing material from on exterior surfaces of the component and/or from interior structures (e.g., holes, voids, channels, passages, cavities, etc.) of the component.

At block 308, the component may be reoriented, adjusted, or otherwise moved within the treatment vessel, while submerged. The process of block 306 may be repeated with the component in the new orientation. This loop of blocks 306-308 may be repeated a number of times to enable removal of the excess manufacturing material from the component while in multiple different orientations. Further, in some embodiments, blocks 306-308 may be performed simultaneously such that the component may be oriented/reoriented during application of the ultrasonic energy.

At block 310, the component may be removed from the liquid treatment material. Removal may involve draining the treatment chamber, to lower the level of the liquid and/or may involve moving the component to raise the component out of the liquid.

At block 312, a cryogenic moisture trap is operated in a first state within the treatment chamber to cause excess moisture of the liquid treatment material to evaporate from surfaces or interior structures of the component. The cryogenic moisture trap may be moved into a position for such procedure or may be statically located. In some embodiments, block 312 may include introduction of an inert gas into the treatment chamber and/or operation of a blower, both of which may aid in the removal of the excess moisture. The first state of operation of the cryogenic moisture trap may involve operating a direction of current though a coil to reduce a temperature of the coil sufficiently to cause condensation or solidification of the liquid treatment material on the cryogenic moisture trap.

At block 314, the treated and cleaned additively manufactured component may be removed from the treatment vessel. It is noted that in some embodiments, block 314 may be performed after block 316, such that the component is removed after to operating the cryogenic moisture trap in the second state.

At block 316, the cryogenic moisture trap is operated in a second state to release the collected liquid treatment material collected at block 312. The second state may be achieved by reversing a current flow through the coil to increase a temperature of the coil, causing the liquid treatment material to be released from the cryogenic moisture trap. In some embodiments, the cryogenic moisture trap may be removed from the treatment chamber before being operated in the second state, in order to prevent any of the liquid treatment material from re-adhering to the component. In some embodiments, a blower (or vacuum) may be employed to draw the collected liquid treatment material away from the cryogenic moisture trap. In some embodiments, the removal of the component (block 314) may occur before release of the captured

Although shown and described above with a single, multipurpose treatment chamber within the treatment vessel, such configuration is not to be limiting. For example, in some embodiments, the treatment vessel may define multiple separate treatment chambers, with the different chambers configured to provide different aspects of the post-manufacturing treating of additively manufactured components.

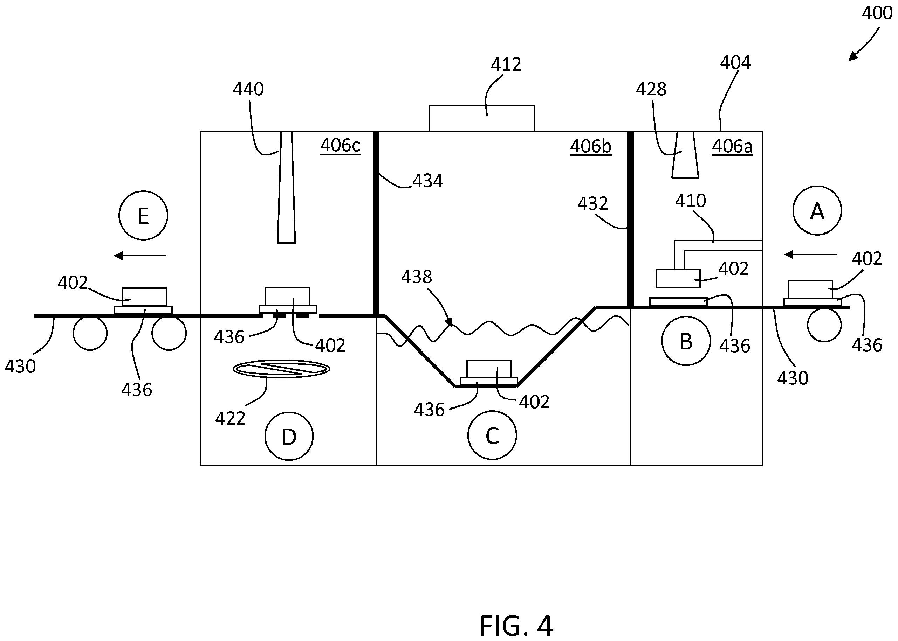

For example, turning now to FIG. 4, a schematic illustration of a component treatment system 400 in accordance with an embodiment of the present disclosure is shown. The component treatment system 400 is configured to treat a component 402 after manufacturing of the component 402. The component 402 is an additively manufactured component or part. In some embodiments, the component 402 is formed through a Laser Powder Bed Fusion manufacturing process. The component 402 may be placed on a conveyor 430. The conveyor 430 is configured to convey the component 402 through a treatment vessel 404 that defines a number of treatment subchambers 406a, 406b, 406c therein. The component 402, as an additively manufactured component, may include excess manufacturing material (e.g., within internal passages/cavities or partially sintered elements on surfaces of the component). The component treatment system 400 is configured to enable both dry and wet post-manufacturing treatment processes on the component 402.

The component treatment system 400 includes the treatment vessel 404 defining the treatment subchambers 406a, 406b, 406c therein. A first treatment subchamber 406a may be configured to dry processing of the component 402. A second treatment subchamber 406b may be configured to wet processing of the component 402. A third treatment subchamber 406c may be configured to performing a drying operation on the component 402. As shown, the first and second treatment subchambers 406a, 406b may be separated by a first separator door 432 and the second and third treatment subchambers 406b, 406c may be separated by a second separator door 434. The first and second separator doors 432, 434 may be configured to provide sealing separation of the respective treatment subchambers 406a, 406b, 406c but are openable or may be passed through to allow the component 402 to travel on the conveyor 430 through the treatment vessel 404. In some embodiments, the separator doors 432, 434 may be supplemented or replaced by cryogenic traps to enable the separation of the different subchambers.

The component 402 may be supported on the conveyor 430 in a moveable or rotatable manner. That is, the component 402 may be configured to be oriented while on the conveyor 430, such as such as on a control platform 436 or similar structure. In some embodiments, the component 402 may be placed on the conveyor 430 and manipulation of the component 402 may be achieved by one or more control arms 410 (e.g., similar to that shown and described above). Furthermore, combinations of control platforms 436 and control arms 410 may be employed. The control platform 436 may allow for relative rotation about one or more axes of the component 402 and may, in some embodiments, allow for rotation about three perpendicular axes (i.e., three dimensional rotation). In some such embodiments, the control platform may be mounted, affixed, or attached to a conveyor that is a rod or wire structure such that the component 402 may be rotated about an axis of the conveyor (i.e., the component 402 can be turned completely upside down from an initial orientation). Initially, at location A, the component 402 is placed on a control platform 436 and may be moved along the conveyor 430.

In operation, and as illustratively shown in this embodiment, the component 402 may be conveyed into the first treatment subchamber 406a. At location B, the component 402 may be dry treated by automated or manual means. As shown, in this embodiment, the control arm 410 can remove the component from the control platform 436 to enable orienting the component 402 within the first treatment subchamber 406a. The first treatment subchamber 406a is configured for dry processing of the component 402. As such, the first treatment subchamber 406a includes a blower 428 to direct a gas toward the component 402 and blow excess manufacturing material off of the surfaces (exterior and/or interior) of the component 402. The blower 428 and the control arm 410 may be operated in tandem or collectively to allow for different orientations of blowing the inert gas at the component 402. In some embodiments, the control arm 410, the control platform 436, and/or the conveyor 430 may be configured to apply vibration to the component 402 during the dry treatment process within the first treatment subchamber 406a. The control arm 410, the conveyor 430, the control platform 436, the blower 428, and the rest of the component treatment system 400 (and components/elements thereof), may be controlled by a controller 412. In this embodiment, the controller 412 is illustrated as part of or attached to the treatment vessel 404. However, in other embodiments, the controller may be a separate control element, such as a general purpose or dedicated computer that is operably connected to the component treatment system 400.

As noted, the component treatment system 400 may be configured for both wet and dry treatment processes. In this embodiment, the component treatment system 400 includes the second treatment subchamber 406b, which is downstream from and adjacent to the first treatment subchamber 406a, with the first and second treatment subchambers 406a, 406b separated by the first separator door 432. The second treatment subchamber 406b is configured for wet processing of the component 402. As such, the second treatment subchamber 406b includes a liquid treatment material 438. When the component 402 reaches location C, the component 402 is submerged in the liquid treatment material 438. The liquid treatment material 438 may be a detergent, oil, acid, base, solvent, deionzed water, and/or alcohol, for example. With the component 402 submerged, the control platform 436 and/or the conveyor 430 may apply vibration to the component 402. Furthermore, the orientation of the component 402 within the liquid treatment material 438 may be adjusted, such as described above, and/or by the inclusion of a control arm, not shown for clarity. When submerged, ultrasonic energy and/or liquid flow and/or vibration of the component may be performed, as described above.

Several cycles of wet process may be performed in succession or the liquid material in a given subchamber may be changed/exchanged for fresh liquid material or a different liquid material. After completion of the wet process in the second treatment subchamber 406b (or additional wet-configured subchambers), the component 402 may be moved into the third treatment subchamber 406c. The third treatment subchamber 406c is configured to perform a drying operation on the component 402 to remove excess moisture left over from the wet processing performed in the second treatment subchamber 406b. As such, a cryogenic moisture trap 422 located is within the third treatment subchamber 406c. The cryogenic moisture trap 422 may be operably connected to and/or controlled by the controller 412. The cryogenic moisture trap 422 is arranged at a position below the component 402, although it may be placed above or otherwise arranged relative to the component 402, when the component 402 is located at location D within the third treatment subchamber 406c. The cryogenic moisture trap 422 may be a coil or other structure, such as a wire mesh, a metal rod, or have other structure. The cryogenic moisture trap 422 is positioned such that during a rinsing, misting, and/or drying operation, moisture (e.g., excess liquid treatment material) that is on and/or trapped within the component 402 can be extracted and removed from the component 402. The third treatment subchamber 406c may be configured with a blower 440 for directing inert gas toward the component 402 to aid in removal of the moisture from the component 402. The blower 440 may be arranged with a rinse feature, such as a misting or fluid dispensing nozzle, either integrated into the blower or as a separate component to provide additional rinsing or cleaning, similar to that described above.

After the dry processing within the third treatment subchamber 406c, the component 102 may be removed from the treatment vessel 404 by the conveyor 430. As such, at location E, a cleaned additively manufactured component may exit the treatment vessel 404.

It will be appreciated that in some embodiments, one or more control arms may be located in each of the treatment subchambers to enable orienting and/or reorienting of the component within the respective subchamber. Further, in some embodiments, each treatment subchamber may be configured with glove access for manual manipulation and/or orientation of the component within the respective treatment subchamber. In one non-limiting example, a control arm and/or glove access may be provided in the second treatment subchamber to enable orientation of the component while submerged within the liquid treatment material.

Advantageously, embodiments of the present disclosure provide for improved and efficient mechanisms for cleaning and removing excess manufacturing material from additively manufactured components. Further, advantageously, in accordance with the present disclosure, embodiments may incorporate multiple powder removal iterations and techniques into a single method/process with integrated drying of the component under inert conditions. Having the ability to use the wet ultrasonic method, in some embodiments, may be useful for specific part geometries to dislodge powder from internal passages. The cryogenic moisture trap, after wet processing, can ensure that liquids and vapors/moisture may be removed from these parts without direct operator-exposure. Accordingly, advantageously, a wider range of liquids and solvents than typically used may be employed for more thorough cleaning of additively manufactured components. The cryogenic moisture trap may also allow for several rinse cycles to be performed on a component, including the use of multiple types of treatment liquids, as well as enabling component to be bagged in a dry inert environment. Furthermore, advantageously, an all-in-one approach for removing powder from additively manufactured components is provided. Such approach, as described herein, allows the processing of more components with a wet process, because it enables a reduction in steps as compared to prior processes. As such, more parts can be economically depowdered, instead of defaulting to a dry process. Furthermore, advantageously, a wet powder trap (i.e., the described cryogenic trap) is safer than a dry only approach and there are economic and hazmat/environmental advantages to wet processing as compared to only dry processing.

The use of the terms "a," "an," "the," and similar references in the context of description (especially in the context of the following claims) are to be construed to cover both the singular and the plural, unless otherwise indicated herein or specifically contradicted by context. The modifier "about" and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the invention has been described in detail in connection with only a limited number of embodiments, it should be readily understood that the invention is not limited to such disclosed embodiments.

Accordingly, the present disclosure is not to be seen as limited by the foregoing description, but is only limited by the scope of the appended claims.

## Claims

1. A method for powder removal on additively manufactured components, the method comprising:
placing the additively manufactured component into a treatment chamber within a treatment vessel;
performing a first treatment operation on the additively manufactured component within the treatment vessel, using a gaseous treatment material, wherein the first treatment operation comprises at least one of vibrating the additively manufactured component and changing an orientation of the additively manufactured component within gaseous treatment material;
performing a second treatment operation on the additively manufactured component within the treatment vessel, using a liquid treatment material, without removing the additively manufactured component from the treatment vessel, wherein the second treatment operation comprises at least one of submerging the additively manufactured component within the liquid treatment material, applying ultrasonic energy to the additively manufactured component within the liquid treatment material, and inducing a flow of the liquid treatment material about the additively manufactured component; and
performing a drying operation employing a cryogenic moisture trap within the treatment vessel, the drying operation performed after the second treatment operation without removing the additively manufactured component from the treatment vessel.

2. The method of claim 1, wherein the liquid treatment material is at least one of a detergent, oil, acid, base, solvent, deionized water, and alcohol.

3. The method of claims 1 or 2, wherein the treatment chamber comprises a first treatment subchamber and a second treatment subchamber, wherein the first treatment operation is performed in the first treatment subchamber and the second treatment operation is performed in the second treatment subchamber.

4. The method of claim 3, further comprising conveying the additively manufactured component on a conveyor through each of the first treatment subchamber and the second treatment subchamber.

5. The method of any preceding claim, further comprising, prior to the second treatment operation, submerging the additively manufactured component in the liquid treatment material.

6. The method of any preceding claim, wherein during at least one of the first treatment operation and the second treatment operation, at least one of ultrasonic energy and pneumatic vibrations are applied to the additively manufactured component.

7. The method of any preceding claim, wherein the second treatment operation comprises:
submerging the additively manufactured component in the liquid treatment material;
applying ultrasonic energy to the additively manufactured component in the liquid treatment material;
actively reorienting the additively manufactured component in the liquid treatment material within the liquid treatment material; and
removing the additively manufactured component from the liquid treatment material.

8. The method of claim 7, further comprising, after removing the additively manufactured component from the liquid treatment material, operating a cryogenic moisture trap within the treatment vessel; and/or wherein the additively manufactured component is lowered into the liquid treatment material to submerge the additively manufactured component; and/or wherein a level of the liquid treatment material is raised to submerge the additively manufactured component.

9. A system for removing powder from an additively manufactured component, the system comprising:
a treatment vessel (104) defining a treatment chamber therein;
a gaseous treatment material source (114) configured to supply a gaseous treatment material into the treatment chamber for performing a first treatment operation on the additively manufactured component located within the treatment vessel, wherein the first treatment operation comprises at least one of vibrating the additively manufactured component and changing an orientation of the additively manufactured component within gaseous treatment material;
a liquid treatment material source (116) configured to supply a liquid treatment material into the treatment chamber for performing a second treatment operation on an additively manufactured component located within the treatment vessel, wherein the second treatment operation comprises at least one of submerging the additively manufactured component within the liquid treatment material, applying ultrasonic energy to the additively manufactured component within the liquid treatment material, and inducing a flow of the liquid treatment material about the additively manufactured component; and
a cryogenic moisture trap (122) configured within the treatment vessel, the cryogenic moisture trap configured to perform a drying operation on the additively manufactured component.

10. The system of claim 9, wherein the liquid treatment material supplied from the liquid treatment material source is at least one of detergent, oil, acid, base, solvent, deionized water, and alcohol.

11. The system of claims 9 or 10, wherein the treatment chamber comprises a first treatment subchamber and a second treatment subchamber, wherein the first treatment operation is performed in the first treatment subchamber and the second treatment operation is performed in the second treatment subchamber.

12. The system of claim 11, wherein the cryogenic moisture trap is located in a third treatment subchamber located adjacent the second treatment subchamber; and/or further comprising a conveyor arranged to move the additively manufactured component through the first treatment subchamber and the second treatment subchamber.

13. The system of any of claims 9-12, further comprising a control arm configured to engage with and releasably retain, support, and hold the additively manufactured component within the treatment chamber.

14. The system of claim 13, wherein the control arm is configured to orient and reorient the additively manufactured component within the treatment chamber.

15. The system of claims 13 or 14, wherein the control arm is configured to apply vibration to the additively manufactured component when the additively manufactured component is engaged by the control arm.

## Patentansprüche

1. Pulverentfernungsverfahren an generativ geformten Komponenten, wobei das Verfahren Folgendes umfasst:
Platzieren der generativ geformten Komponente in einer Behandlungskammer innerhalb eines Behandlungsbehälters;
Durchführen eines ersten Behandlungsvorgangs an der generativ geformten Komponente innerhalb des Behandlungsbehälters unter Verwendung eines gasförmigen Behandlungsmaterials, wobei der erste Behandlungsvorgang mindestens eines aus Vibrieren der generativ geformten Komponente und Ändern einer Ausrichtung der generativ geformten Komponente innerhalb des gasförmigen Behandlungsmaterials umfasst;
Durchführen eines zweiten Behandlungsvorgangs an der generativ geformten Komponente innerhalb des Behandlungsbehälters unter Verwendung eines flüssigen Behandlungsmaterials, ohne die generativ geformte Komponente aus dem Behandlungsbehälter zu entfernen, wobei der zweite Behandlungsvorgang mindestens eines von Untertauchen der generativ geformten Komponente in dem flüssigen Behandlungsmaterial, Anwenden von Ultraschallenergie auf die generativ geformte Komponente innerhalb des flüssigen Behandlungsmaterials und Induzieren eines Flusses des flüssigen Behandlungsmaterials um die generativ geformte Komponente herum umfasst; und
Durchführen eines Trocknungsvorgangs unter Verwendung einer kryogenen Feuchtigkeitsfalle innerhalb des Behandlungsbehälters, wobei der Trocknungsvorgang nach dem zweiten Behandlungsvorgang durchgeführt wird, ohne die generativ geformte Komponente aus dem Behandlungsbehälter zu entfernen.

2. Verfahren nach Anspruch 1, wobei das flüssige Behandlungsmaterial mindestens eines aus Detergens, Öl, Säure, Base, Lösemittel, vollentsalztem Wasser und Alkohol ist.

3. Verfahren nach Anspruch 1 oder 2, wobei die Behandlungskammer eine erste Behandlungsunterkammer und eine zweite Behandlungsunterkammer umfasst, wobei der erste Behandlungsvorgang in der ersten Behandlungsunterkammer durchgeführt wird und der zweite Behandlungsvorgang in der zweiten Behandlungsunterkammer durchgeführt wird.

4. Verfahren nach Anspruch 3, das weiter das Fördern der generativ geformten Komponente auf einem Förderer durch jede der ersten Behandlungsunterkammer und der zweiten Behandlungsunterkammer umfasst.

5. Verfahren nach einem der vorstehenden Ansprüche, das weiter vor dem zweiten Behandlungsvorgang das Untertauchen der generativ geformten Komponente in dem flüssigen Behandlungsmaterial umfasst.

6. Verfahren nach einem der vorstehenden Ansprüche, wobei während mindestens eines von dem ersten Behandlungsvorgang oder dem zweiten Behandlungsvorgang, mindestens eines von Ultraschallenergie und pneumatische Vibrationen auf die generativ geformte Komponente angewandt werden.

7. Verfahren nach einem der vorstehenden Ansprüche, wobei der zweite Behandlungsvorgang Folgendes umfasst:
Untertauchen der generativ geformten Komponente in dem flüssigen Behandlungsmaterial;
Anwenden von Ultraschallenergie auf die generativ geformte Komponente in dem flüssigen Behandlungsmaterial;
aktives Neuausrichten der generativ geformten Komponente in dem flüssigen Behandlungsmaterial innerhalb des flüssigen Behandlungsmaterials; und
Entfernen der generativ geformten Komponente aus dem flüssigen Behandlungsmaterial.

8. Verfahren nach Anspruch 7, das weiter nach dem Entfernen der generativ geformten Komponente aus dem flüssigen Behandlungsmaterial, das Betreiben einer kryogenen Feuchtigkeitsfalle innerhalb des Behandlungsbehälters umfasst; und/oder wobei die generativ geformte Komponente in das flüssige Behandlungsmaterial gesenkt wird, um die generativ geformte Komponente unterzutauchen; und/oder wobei ein Pegel des flüssigen Behandlungsmaterials angehoben wird, um die generativ geformte Komponente unterzutauchen.

9. System zum Entfernen von Pulver von einer generativ geformten Komponente, wobei das System Folgendes umfasst:
einen Behandlungsbehälter (104), der darin eine Behandlungskammer definiert;
eine gasförmige Behandlungsmaterialsquelle (114), die dazu konfiguriert ist, ein gasförmiges Behandlungsmaterial in die Behandlungskammer zuzuführen, um einen ersten Behandlungsvorgang an der generativ geformten Komponente, die sich innerhalb des Behandlungsbehälters befindet, durchzuführen,
wobei der erste Behandlungsvorgang mindestens eines von Vibrieren der generativ geformten Komponente und Ändern einer Ausrichtung der generativ geformten Komponente innerhalb des gasförmigen Behandlungsmaterials umfasst;
eine flüssigen Behandlungsmaterialquelle (116), die dazu konfiguriert ist, ein flüssiges Behandlungsmaterial in die Behandlungskammer zuzuführen, um einen zweiten Behandlungsvorgang an einer generativ geformten Komponente, die sich innerhalb des Behandlungsbehälters befindet, durchzuführen, wobei der zweite Behandlungsvorgang mindestens eines von Untertauchen der generativ geformten Komponente in dem flüssigen Behandlungsmaterial, Anwenden von Ultraschallenergie auf die generativ geformte Komponente innerhalb des flüssigen Behandlungsmaterials und Induzieren eines Flusses des flüssigen Behandlungsmaterials um die generativ geformte Komponente umfasst; und
eine kryogene Feuchtigkeitsfalle (122), die innerhalb des Behandlungsbehälters konfiguriert ist, wobei die kryogene Feuchtigkeitsfalle dazu konfiguriert ist, um einen Trocknungsvorgang an der generativ geformten Komponente durchzuführen.

10. System nach Anspruch 9, wobei das flüssige Behandlungsmaterial, das von der flüssigen Behandlungsmaterialsquelle zugeführt wird, mindestens eines von Detergens, Öl, Säure, Base, Lösungsmittel, vollentsalztem Wasser und Alkohol ist.

11. System nach Anspruch 9 oder 10, wobei die Behandlungskammer eine erste Behandlungsunterkammer und eine zweite Behandlungsunterkammer umfasst, wobei der erste Behandlungsvorgang in der ersten Behandlungsunterkammer durchgeführt wird und der zweite Behandlungsvorgang in der zweiten Behandlungsunterkammer durchgeführt wird.

12. System nach Anspruch 11, wobei sich die kryogene Feuchtigkeitsfalle in einer dritten Behandlungsunterkammer befindet, die an die zweite Behandlungsunterkammer angrenzend liegt; und/oder die weiter einen Förderer umfasst, der angeordnet ist, um die generativ geformte Komponente durch die erste Behandlungsunterkammer und die zweite Behandlungsunterkammer zu bewegen.

13. System nach einem der Ansprüche 9-12, das weiter einen Steuerarm umfasst, der dazu konfiguriert ist, mit der generativ geformten Komponente in Eingriff zu treten und diese lösbar zurückzuhalten, zu tragen und innerhalb der Behandlungskammer zu halten.

14. System nach Anspruch 13, wobei der Steuerarm dazu konfiguriert ist, die generativ geformte Komponente innerhalb der Behandlungskammer auszurichten und neu auszurichten.

15. System nach Anspruch 13 oder 14, wobei der Steuerarm dazu konfiguriert ist, eine Vibration auf die generativ geformte Komponente auszuüben, wenn die generativ geformte Komponente mit dem Steuerarm in Eingriff steht.

## Revendications

1. Procédé d'élimination de poudre sur des composants fabriqués de manière additive, le procédé comprenant :
le placement du composant fabriqué de manière additive dans une chambre de traitement à l'intérieur d'un récipient de traitement ;
l'exécution d'une première opération de traitement sur le composant fabriqué de manière additive à l'intérieur du récipient de traitement, à l'aide d'un matériau de traitement gazeux, dans lequel la première opération de traitement comprend au moins l'une parmi la vibration du composant fabriqué de manière additive et la modification d'une orientation du composant fabriqué de manière additive à l'intérieur du matériau de traitement gazeux ;
l'exécution d'une seconde opération de traitement sur le composant fabriqué de manière additive à l'intérieur du récipient de traitement, à l'aide d'un matériau de traitement liquide, sans retirer le composant fabriqué de manière additive du récipient de traitement, dans lequel la seconde opération de traitement comprend au moins l'une parmi l'immersion du composant fabriqué de manière additive à l'intérieur du matériau de traitement liquide, l'application d'énergie ultrasonique au composant fabriqué de manière additive à l'intérieur du matériau de traitement liquide et l'induction d'un écoulement du matériau de traitement liquide autour du composant fabriqué de manière additive ; et
l'exécution d'une opération de séchage en utilisant un piège à humidité cryogénique à l'intérieur du récipient de traitement,
l'opération de séchage étant exécutée après la seconde opération de traitement sans retirer le composant fabriqué de manière additive du récipient de traitement.

2. Procédé selon la revendication 1, dans lequel le matériau de traitement liquide est au moins l'un parmi un détergent, une huile, un acide, une base, un solvant, de l'eau désionisée et un alcool.

3. Procédé selon les revendications 1 ou 2, dans lequel la chambre de traitement comprend une première sous-chambre de traitement et une deuxième sous-chambre de traitement, dans lequel la première opération de traitement est exécutée dans la première sous-chambre de traitement et la seconde opération de traitement est exécutée dans la deuxième sous-chambre de traitement.

4. Procédé selon la revendication 3, comprenant en outre le transport du composant fabriqué de manière additive sur un transporteur à travers chacune de la première sous-chambre de traitement et de la deuxième sous-chambre de traitement.

5. Procédé selon une quelconque revendication précédente, comprenant en outre, avant la seconde opération de traitement, l'immersion du composant fabriqué de manière additive dans le matériau de traitement liquide.

6. Procédé selon une quelconque revendication précédente, dans lequel pendant au moins l'une parmi la première opération de traitement et la seconde opération de traitement, au moins l'une parmi l'énergie ultrasonique et les vibrations pneumatiques sont appliquées au composant fabriqué de manière additive.

7. Procédé selon une quelconque revendication précédente, dans lequel la seconde opération de traitement comprend :
l'immersion du composant fabriqué de manière additive dans le matériau de traitement liquide ;
l'application d'énergie ultrasonique au composant fabriqué de manière additive dans le matériau de traitement liquide ;
la réorientation active du composant fabriqué de manière additive dans le matériau de traitement liquide à l'intérieur du matériau de traitement liquide ; et
le retrait du composant fabriqué de manière additive du matériau de traitement liquide.

8. Procédé selon la revendication 7, comprenant en outre, après avoir retiré le composant fabriqué de manière additive du matériau de traitement liquide, l'actionnement d'un piège à humidité cryogénique à l'intérieur du récipient de traitement ; et/ou dans lequel le composant fabriqué de manière additive est abaissé dans le matériau de traitement liquide pour immerger le composant fabriqué de manière additive ; et/ou dans lequel un niveau du matériau de traitement liquide est élevé pour immerger le composant fabriqué de manière additive.

9. Système d'élimination de poudre d'un composant fabriqué de manière additive, le système comprenant :
un récipient de traitement (104) définissant une chambre de traitement à l'intérieur ;
une source de matériau de traitement gazeux (114) configurée pour fournir un matériau de traitement gazeux dans la chambre de traitement pour exécuter une première opération de traitement sur le composant fabriqué de manière additive à l'intérieur du récipient de traitement, dans lequel la première opération de traitement comprend au moins l'une parmi la vibration du composant fabriqué de manière additive et la modification d'une orientation du composant fabriqué de manière additive à l'intérieur du matériau de traitement gazeux ;
un source de matériau de traitement liquide (116) configurée pour fournir un matériau de traitement liquide dans la chambre de traitement pour exécuter une seconde opération de traitement sur un composant fabriqué de manière additive situé à l'intérieur du récipient de traitement, dans lequel la seconde opération de traitement comprend au moins l'une parmi l'immersion du composant fabriqué de manière additive à l'intérieur du matériau de traitement liquide, l'application d'énergie ultrasonique au composant fabriqué de manière additive à l'intérieur du matériau de traitement liquide et l'induction d'un écoulement du matériau de traitement liquide autour du composant fabriqué de manière additive ; et
un piège à humidité cryogénique (122) configuré à l'intérieur du récipient de traitement, le piège à humidité cryogénique étant configuré pour exécuter une opération de séchage sur le composant fabriqué de manière additive.

10. Système selon la revendication 9, dans lequel le matériau de traitement liquide fourni par la source de matériau de traitement liquide est au moins l'un parmi un détergent, une huile, un acide, une base, un solvant, de l'eau désionisée et un alcool.

11. Système selon les revendications 9 ou 10, dans lequel la chambre de traitement comprend une première sous-chambre de traitement et une deuxième sous-chambre de traitement, dans lequel la première opération de traitement est exécutée dans la première sous-chambre de traitement et la seconde opération de traitement est exécutée dans la deuxième sous-chambre de traitement.

12. Système selon la revendication 11, dans lequel le piège à humidité cryogénique est situé dans une troisième sous-chambre de traitement située adjacente à la deuxième sous-chambre de traitement ; et/ou comprenant en outre un transporteur agencé pour déplacer le composant fabriqué de manière additive à travers la première sous-chambre de traitement et la deuxième sous-chambre de traitement.

13. Système selon l'une quelconque des revendications 9 à 12, comprenant en outre un bras de commande configuré pour venir en prise avec et retenir, supporter et maintenir de manière amovible le composant fabriqué de manière additive à l'intérieur de la chambre de traitement.

14. Système selon la revendication 13, dans lequel le bras de commande est configuré pour orienter et réorienter le composant fabriqué de manière additive à l'intérieur de la chambre de traitement.

15. Système selon les revendications 13 ou 14, dans lequel le bras de commande est configuré pour appliquer une vibration au composant fabriqué de manière additive lorsque le composant fabriqué de manière additive est mis en prise par le bras de commande.
